# EUROPEAN PATENT SPECIFICATION

(11) **EP 0 671 885 B1**
(45) Date of publication and mention of the grant of the patent: **04.08.1999**
(21) Application number: 93908834.0
(22) Date of filing: 26.03.1993
(51) Int. Cl.: A23C 11/00, A23C 9/12, A23J 3/08, A23L 2/00

(54) **METHOD FOR PRODUCTION OF A MILK LIKE PRODUCT, THE MILK LIKE PRODUCT AND A USE THEREOF**
VERFAHREN ZUR HERSTELLUNG EINES MILCHÄHNLICHEN PRODUKTES, DAS MILCHÄHNLICHE PRODUKT UND DEREN VERWENDUNG
PROCEDE DE PREPARATION D'UN PRODUIT ANALOGUE AU LAIT, PRODUIT ANALOGUE AU LAIT ET UTILISATION DE CE PRODUIT

(30) Priority: 27.03.1992 DK 41892
(43) Date of publication of application: 20.09.1995
(73) Proprietor: NOVO NORDISK A/S, 2880 Bagsvaerd (DK)
(72) Inventor: NIELSEN, Per, Munk, DK-3400 Hillerod (DK); PETERSEN, Bent, Riber, DK-2100 Kobenhavn (DK); BUDOLFSEN, Gitte, DK-2000 Frederiksberg (DK)
(86) International application number: DK9300113
(87) International publication number: WO9319610

(56) References cited:
- DE-C- 181 918
- Dialog Information Service, File 351, WPIL, Dialog Accession No. 00874421, WPI Accession No. 91-248437/34, (AJIN): "Food Material Contg. Denaturated Milk Proteins - Obtd. by Treating Liq. Contg. Milk Proteins with Trans-Glutaminase, Heating and Drying"; & JP,A,03 160 957, publ. 910710.
- Dialog Information Service, File 50, CAB, Dialog Accession No. 1258838, CAB Accession No. 0D054-03006, RAO, D.S.: "Enzymatic Modification of Milk Proteins During Processing - A Possible Role for Native Milk Proteinase", Indian Dairyman (1991) 43 (11) p. 514-517.
- Dialog Information Service, File 351, WPIL, Dialog Accession No. 008465483, WPI Accession No. 90-352483/47, (AJIN): "Minced Meat and Fish Paste - Contains Soybean Protein and/or Milk Protein and Transglutaminase"; & JP,A,02 255 060, publ. 901015.

## Description

In this specification with claims a milk like product is to be understood as comprising a product produced with a liquid containing milk proteins from an animal source as a starting material. Examples of liquids containing milk proteins from an animal source are cow milk, buffalo milk, goat milk, sheep milk, and animal milk fortified with casein or whey proteins.

It is known that milk is physically unstable to pH reduction, forming a coagulum at low pH. Only if special care is taken during lowering of the pH, a phase separation will not occur. This instability is even more pronounced when the acidified milk is heat treated in order to make a product with a long shelf life.

Thus, it is the purpose of the invention to provide a method for provision of a milk like product, which is physically more stable than the hitherto known milk like products.

Surprisingly, according to the invention it has been found that the purpose of the invention can be fulfilled, if transglutaminase is added to a liquid containing milk proteins and Ca⁺⁺, if required, and if the liquid is acidified to a defined pH region. As an explanatory remark it can be added that the skilled worker in the art will be aware that some transglutaminases require Ca⁺⁺ in order to exhibit enzymatic activity, and others do not.

Thus, the method for production of a milk like product according to the invention is characterized by the fact that transglutaminase is added to a liquid containing milk proteins, that the liquid contains Ca⁺⁺, if required, in an amount sufficient for the reaction catalyzed by the transglutaminase, and that the pH of the liquid is adjusted to a value of between 2.8 and 5.2.

Thus, it has been found that the milk like product produced by means of the method according to the invention is extremely stable in comparison to the prior art milk like products. Documentation will be presented later in this specification.

If according to the invention cow milk is used as the liquid containing milk proteins it has been found that the milk like product according to the invention does not form a sediment at pH values between 2.8 and 5.2.

If according to the invention the acidification is carried out by a biological acidification similar to a yoghurt production it has been found that a heat stable yoghurt can be produced.

Similarly, if the production of the milk part used as an ingredient for yoghurt ice cream is performed according to the invention the ingredient can be pasteurized, which leads to a long shelf life of the yoghurt ice cream mix which is needed for e.g. soft ice mixes.

The adjustment of pH can be carried out as an addition of food grade acid, e.g. HCl, citric acid, malic acid, tartaric acid, lactic acid, or glucone delta lactone, or as an acidification with acid generating microorganisms. If acid is added directly, this addition should be performed after the addition of transglutaminase to the liquid. If acidification is carried out by means of acid generating microorganisms, the acid generating microorganisms can be added to the liquid before addition of the transglutaminase, because the acid generation in this case is very slow. The stabilizing effect of transglutaminase addition can be further illustrated by the fact that no phase separation occurs, even when stirring is carried out during acidification. This is in contrast to traditional yoghurt production, which requires an acidification without stirring.

The amount of transglutaminase to be added depends on the reaction time. If the reaction time is long, e.g. 2 hours, very little transglutaminase is necessary in order to generate the stability. Also, there is no need for inactivation of the transglutaminase after the end of the reaction because the transglutaminase is inactivated at a pH value between 2.8 and 5.2.

From Japanese unexamined patent application no. JP-A-3160957 it appears that a material containing novel modified milk protein can be obtained by letting transglutaminase act on a liquid product containing milk protein, and by subsequent heating and drying. Also, it appears that the object of the Japanese invention is the provision of a product, which is able to form a gel on heating. However, it does not appear from the Japanese citation that a very valuable product can be obtained by acidification, as indicated in this specification, and a skilled worker in the art familiar with the Japanese citation would not find the slightest incentive to acidify according to the invention.

A preferred embodiment of the method according to the invention is characterized by the fact that the transglutaminase is of human, of bovine or of microbial origin. In this manner the method according to the invention can be carried out in an economically sound manner.

A preferred embodiment of the method according to the invention is characterized by the fact that the liquid containing milk proteins is milk from domestic animals, preferably from cows. This is a cheap and easily available starting material.

A preferred embodiment of the method according to the invention is characterized by the fact that the milk exhibits a reduced fat content. In this manner low calorie milk products can be produced.

A preferred embodiment of the method according to the invention is characterized by the fact that the liquid containing milk proteins is cream originating from domestic animals, preferably from cows. In this manner gelled dessert products with satisfactory organoleptic properties can be produced.

A preferred embodiment of the method according to the invention is characterized by the fact that the pH is adjusted to a value between 3.5 and 5.0, preferably between 4.0 and 4.5. In this manner a product with excellent organoleptic properties and an excellent microbial stability is obtained.

Also, the invention comprises a milk like product, which is characterized by the fact that it is produced by means of the method according to the invention.

Finally, the invention comprises a use of the milk like product according to the invention, as an ingredient or an additive in a drink comprising fruit juice, fruit concentrate, fruit flavor or other acidic flavors, and the milk like product. If ordinary milk is mixed with fruit juice, a coagulation will occur. However, no coagulation will occur in relation to the use according to the invention, but a stable, homogeneous, and organoleptically satisfactory drink will appear.

In the following examples the method according to the invention, the milk like product according to the invention, and the use according to the invention will be illustrated.

### EXAMPLE 1

As a starting material 100 ml of whole cow milk was used. Ca⁺⁺ as CaCl₂ was added to a concentration of 5 mM Ca⁺⁺. The pH was adjusted to 7.0, and the temperature was adjusted to 37°C. Transglutaminase was added as 15 mg of activated factor XIII. Also, a control experiment without transglutaminase was carried out. After 30 minutes the pH value in relation to both the experiment and the control was adjusted to 4.8 by means of 6N HCl. A heavy phase separation took place in the control, but no phase separation took place in the milk like product according to the invention. Even if the milk like product according to the invention was pasteurized to 80°C no phase separation took place.

### EXAMPLE 2

300 ml of whole cow milk was heat treated in a micro wave oven at 90°C for 5 minutes and subsequently cooled to 41°C. Ca⁺⁺ was added to a concentration of 5 mM Ca⁺⁺. Transglutaminase was added as 45 mg activated factor XIII. Also a control experiment without transglutaminase was carried out.

To both samples was added a yoghurt starter culture (Chr. Hansens Laboratory, YM 380) in a dosage of 0.08% w/v. The acidification process was followed. At pH 4.5 the yoghurt samples were heated to a center temperature of 90°C in a micro wave oven and homogenized in a desk homogenizer (350 bar) at 5°C. The consistency of the samples was evaluated the next day. The control sample had retained the viscosity of cow milk (liquid yoghurt) while the sample treated with transglutaminase exhibited a consistency of a semi-solid yoghurt.

### EXAMPLE 3

Two samples of skim milk, each with a volume of 3 litres, were processed into spray dried yoghurt powder intended for preparation of reconstituted yoghurt as follows. The skim milk was heat treated at 90°C for 5 mintues and thermostatted to 41°C. 580 mg of activated factor XIII was added to sample No. 1. 0.15 g of yoghurt starter culture (Chr. Hansens Laboratory, YC DVS) suspended in 7.5 ml of H₂O were added to samples Nos. 1 and 2 (control). The acidification process, at 41°C, was followed to pH = 4.5.

The samples were stored at 4°C overnight and spray dried together with a third sample (No. 3) of a commercial yoghurt bought in a supermarket.

The specifications of the spray drying processes were:

| Process parameters | Sample No. 1 | Sample No. 2 | Sample No. 3 |
|---|---|---|---|
| pH (initial) | 4.24 | 4.03 | 3.92 |
| Yoghurt temp., °C | 10.2 | 10.5 | 14.0 |
| Inlet temp., °C | 180 | 180 | 180 |
| Outlet temp., °C | 65-70 | 65-70 | 65-70 |

| Product properties | | | |
|---|---|---|---|
| Dry solids | 94.6 | 91.4 | 93.4 |
| pH | 4.20 | 4.03 | 3.96 |

Three samples of reconstituted yoghurt were prepared from the three powder samples originating from 10 g of spray dried powder in 100 ml H₂O. Mixing was performed by treatment with a mixer, type Ultraturrax, for 90 seconds. The samples were left overnight at 1°C and inspected the next day:

| | Sample No. 1 (+ transglutaminase) | Sample No. 2 (control) | Samples No. 3 (commercial product) |
|---|---|---|---|
| pH | 4.20 | 4.16 | 3.96 |
| Consistency | Homogeneous | Two phases | Two phases |
| Viscosity, seconds (discharge time from 10 ml pipette) | 8.5 | 6.0 | 6.5 |

### EXAMPLE 4

Whole cow milk was treated with 0.14 g of transglutaminase per 100 ml milk, at 37°C for 60 minutes. With treated and untreated cow milk as a basis three acid soft drinks were prepared under agitation, according to the following recipes.
1. 10 ml of milk (± transglutaminase)
10 ml of carbonized water
3 ml of orange sirup
pH: 4.98

The treated sample remains homogeneous for at least 30 minutes while the control immediately forms a precipitate.
2. 10 ml of milk (± transglutaminase)
10 ml of concentrated orange juice
3 ml of orange sirup
pH: 4.54

The treated sample remains homogeneous for at least 30 minutes while the control immediately forms a precipitate.
3. 10 ml of milk (± transglutaminase)
20 ml of carbonized water
2 ml of black current juice
pH: 4.99

The treated sample remains homogeneous for at least 30 minutes while the control immediately forms a precipitate.

## Claims

1. Method for production of a milk like product, wherein transglutaminase is added to a liquid containing milk proteins, wherein the liquid contains Ca⁺⁺, if required, in an amount sufficient for the reaction catalyzed by the transglutaminase, and wherein the pH of the liquid is adjusted to a value of between 2.8 and 5.2.

2. Method according to Claim 1, wherein the transglutaminase is of human, of bovine or of microbial origin.

3. Method according to Claim 1 or 2, wherein the liquid containing milk proteins is milk from domestic animals, preferably from cows.

4. Method according to Claim 3, wherein the milk exhibits a reduced fat content.

5. Method according to Claim 1 or 2, wherein the liquid containing milk protein is cream originating from domestic animals, preferably from cows.

6. Method according to Claims 1 - 5, wherein the pH is adjusted to a value between 3.5 and 5.0, preferably between 4.0 and 4.5.

7. Method according to Claims 1 - 6, wherein the pH adjustment is carried out by biological fermentation, preferably by means of a yoghurt starter culture.

8. Milk like product, characterized by the fact that it is produced by means of the method according to Claims 1 - 7.

9. Use of the milk like product according to Claim 8, as an ingredient or an additive in a drink comprising fruit juice, fruit concentrate, fruit flavor or other acidic flavors, and the milk like product.

## Patentansprüche

1. Vorfahren zur Herstellung eines milchartigen Produkts, wobei Transglutaminase zu einer Flüssigkeit mit einem Gehalt an Milchproteinen gegeben wird, wobei die Flüssigkeit gegebenenfalls Ca⁺⁺ in einer für die durch die Glutaminase katalysierte Reaktion ausreichenden Menga enthält und wobei der pH-Wert des Flüssigkeit auf einen Wert zwischen 2,8 und 5,2 eingestellt wird.

2. Verfahren nach Anspruch 1, wobei die Transglutaminase humanen, bovinen oder mikrobiellen Ursprungs ist.

3. Verfahren nach Anspruch 1 oder 2, wobei es sich bei der Flüssigkeit mit einem Gehalt an Milchproteinen um Milch von Haustieren und vorzugsweise von Kühen handelt.

4. Verfahren nach Anspruch 3, wobei die Milch einen verringerten Fettgehalt aufweist.

5. Verfahren nach Anspruch 1 oder 2, wobei es sich bei der Flüssigkeit mit einem Gehalt an Milchprotein um Sahne handelt, die von Haustieren und vorzugsweise von Kühen stammt.

6. Verfahren nach den Ansprüchen 1-5, wobei der pH-Wert auf einen Wert zwischen 3,5 und 5,0 und vorzugsweise zwischen 4,0 und 4,5 eingestellt wird.

7. Verfahren nach den Ansprüchen 1-6, wobei die pH-Einstellung durch biologische Fermentation und vorzugsweise mittels einer Joghurt-Starterkultur durchgeführt wird.

8. Milchartiges Produkt, dadurch gekennzeichnet, daß es mittels des Verfahrens gemäß den Ansprüchen 1-7 hergestellt worden ist.

9. Verwendung des milchartigen Produkts nach Anspruch 8 als ein Bestandteil oder ein Additiv in einem Getränk, das Fruchtsaft, Fruchtkonzentrat, Fruchtaroma oder andere saure Aromastoffe sowie das milchartige Produkt umfaßt.

## Revendications

1. Procédé pour la préparation d'un produit analogue au lait, dans lequel une transglutaminase est ajoutée à un liquide contenant des protéines du lait, le liquide contenant du Ca⁺⁺, si cela est nécessaire, en une quantité suffisante pour que la réaction soit catalysée par la transglutaminase, et selon lequel le pH du liquide est réglé à une valeur comprise entre 2,8 et 5,2.

2. Procédé selon la revendication 1, selon lequel la transglutaminase est d'origine humaine, bovine ou microbiologique.

3. Procédé selon la revendication 1 ou 2, selon lequel le liquide contenant des protéines du lait est du lait provenant d'animaux domestiques, de préférence de vaches.

4. Procédé selon la revendication 3, selon lequel le lait présente une teneur réduite en graisses.

5. Procédé selon la revendication 1 ou 2, selon lequel le liquide contenant des protéines du lait est une crème obtenu à partir d'animaux domestiques, de préférence de vaches.

6. Procédé selon les revendications 1-5, selon lequel le pH est réglé à une valeur comprise entre 3,5 et 5,0, de préférence entre 4,0 et 4,5.

7. Procédé selon les revendications 1-6, selon lequel le réglage du pH est exécuté par fermentation biologique, de préférence au moyen d'une culture de départ pour yaourt.

8. Produit analogue au lait, caractérisé en ce qu'il est produit au moyen du procédé selon les revendications 1-7.

9. Utilisation du produit analogue au lait selon la revendication 8, en tant qu'ingrédient ou additif dans une boisson comprenant un jus de fruit, un concentré de fruit, une substance aromatique de fruit ou d'autres substances aromatiques acides et le produit analogue au lait.
